# EUROPÄISCHE PATENTSCHRIFT

(11) **EP 1 272 077 B1**
(45) Veröffentlichungstag und Bekanntmachung des Hinweises auf die Patenterteilung: **27.04.2005**
(21) Anmeldenummer: 01929354.7
(22) Anmeldetag: 23.02.2001
(51) Int. Cl.: A47J 42/56

(54) **KÜCHENGERÄT**
KITCHEN APPLIANCE
APPAREIL DE CUISINE

(30) Priorität: 31.03.2000 DE 10016293
(43) Veröffentlichungstag der Anmeldung: 08.01.2003
(73) Patentinhaber: BSH Bosch und Siemens Hausgeräte GmbH, 81739 München (DE)
(72) Erfinder: ZIBRET, Igor, 3327 Smartno ob Paki (SI); PAVLOVIC, Henrik, 3333 Ljubno ob Savinji (SI)
(86) Internationale Anmeldenummer: PCT/EP2001/002084
(87) Internationale Veröffentlichungsnummer: WO 2001/074214

(56) Entgegenhaltungen:
- EP-A- 0 081 874
- FR-A- 2 545 712
- GB-A- 2 249 368
- US-A- 4 362 277

## Beschreibung

Die Erfindung betrifft ein Küchengerät, insbesondere Küchenmaschine oder Saftzentrifuge, bei dem in einem mittels eines Deckelteiles verschließbaren Behältnis ein mit dem elektromotorischen Antrieb des Gerätes gekoppeltes Werkzeug angeordnet ist und am Gehäuse des Küchengerätes ein Betätigungselement für einen im Stromkreis des elektromotorischen Antriebes liegenden Schalter vorgesehen ist.

US 4362277 offenbart eine bekannte Küchenmaschine welche eine mittels eines Deckels verschließbare Rührschüssel auf weist. In dieser Rührschüssel können verschiedene Bearbeitungswerkzeuge, z.B. Knethaken oder Rührbesen auf eine in der Mitte der Rührschüssel angeordnete Abtriebswelle, welche vom Antriebsmotor der Küchenmaschine angetrieben wird, aufgesteckt werden. Ist der Deckel auf die Rührschüssel aufgesetzt, dann besteht kein Gefahr einer Verletzung durch die rotierenden Bearbeitungswerkzeuge. Bei diesem Stand der Technik ist nachteilig, dass das Betätigungselement lediglich eine einzige Einstellung hat, in der das Küchengerät betreibbar ist.

Der Erfindung liegt die Aufgabe zugrunde, ein Küchengerät der eingangs beschriebenen Art so auszubilden, dass möglichst keine Verletzungsgefahr durch die rotierenden Bearbeitungswerkzeuge besteht, während mehrere Schaltpositionen schaltbar sind.

Die Lösung der gestellten Aufgabe gelingt nach der Erfindung durch ein Küchengerät wie beschrieben in Anspruch 1. Ein durch die Schaltbewegung des Betätigungselementes verstellbarer Sperrkloben ist vorgesehen in dessen Verstellweg ein Sperrglied ragt, welches durch die Einwirkung einer Kraft selbsttätig in seine Sperrstellung verstellbar und durch ein mit der Deckelteil gekoppeltes Verstellorgan aus seiner Sperrstellung bewegbar ist. Durch das in den Verstellweg des Sperrklobens ragende Sperrglied wird eine Schaltbewegung des Betätigungselementes verhindert. Erst wenn das Sperrglied durch das Deckelteil aus seiner Sperrstellung verschwenkt ist, ist eine Schaltbewegung des Betätigungselementes möglich. Damit kann das Küchengerät nur noch eingeschaltet werden, wenn das Deckelteil auf das Behältnis aufgesetzt ist. Eine Berührung der rotierenden Bearbeitungswerkzeuge ist daher nicht mehr möglich.

Bei einem als Küchenmaschine ausgebildeten Küchengerät lässt sich die entsprechende Verriegelung der Schaltbewegung des Betätigungselementes auf konstruktiv einfache Weise dadurch erreichen. dass an dem auf die Rührschüssel der Küchenmaschine aufsetzbaren Deckelteil als Verstellorgan eine nach radial außen ragende Lasche ausgebildet ist, welche durch eine entsprechende Drehbewegung der Rührschüssel in einen an einem senkrecht verlaufenden Gehäuseteil der Küchenmaschine vorgesehenen Schlitz einschwenkbar ist, dass das Sperrglied doppelhebelarmig ausgebildet und verschwenkbar angeordnet ist und der eine Hebelarm des Sperrgliedes im Verstellweg des Sperrklobens liegt und dass ferner der andere Hebelarm des Sperrgliedes im Bereich des Schlitzes in den Verschwenkweg der Lasche ragt.

Zweckmäßigerweise wird die Rückverschwenkung des Sperrgliedes in seine Sperrstellung durch die Einwirkung einer Federkraft durchgeführt. Damit ist sichergestellt, dass das Sperrglied stets seine Sperrstellung einnimmt, sobald es durch den Deckel der Rührschüssel nicht mehr in der Freigabestellung gehalten wird.

Die Verstellung des Sperrklobens in Abhängigkeit von der jeweiligen Schaltbewegung des Betätigungselementes wird auf einfache Weise dadurch erzielt, dass der Sperrkloben durch Krafteinwirkung an einer an einer Kulissenscheibe vorgesehenen Kulissenbahn anliegt, die in Verdrehrichtung mit dem als verdrehbarer Schaltknebel ausgebildeten Betätigungselement gekoppelt ist. Bei dieser konstruktiven Ausführungsform ist eine kraftschlüssige Ankoppelung des Sperrklobens an die Kulissenscheibe gegeben.

Eine formschlüssige Ankoppelung des Sperrklobens an die Kulissenscheibe besteht darin, dass der Sperrkloben mittels eines mit ihm verbundenen Zapfens in einen an einer Kulissenscheibe vorgesehenen Kulissenschlitz eingreift, die in Verdrehrichtung mit dem als verdrehbarer Schaltknebel ausgebildeten Betätigungselement gekoppelt ist.

Ein Abnehmen des Deckels von der Rührschüssel in der "Ein"-Stellung des Betätigungselementes wird dadurch verhindert, dass der Sperrkloben in der Ein-Stellung des Schaltknebels den einen Hebelarm des Sperrgliedes hintergreift und die Rückschwenkbewegung des Sperrgliedes blockiert. Solange sich der Schaltknebel und damit auch der durch ihn betätigbare Schalter in der "Ein"-Stellung befindet, kann das Sperrglied nicht zurückgeschwenkt werden. Dadurch wird auch eine Schwenkbewegung des Deckels, durch die die Lasche aus dem Schlitz herausbewegt werden könnte, blockiert. Solange sich aber die Lasche in dem Schlitz befindet kann der Deckel nicht von der Rührschüssel abgenommen werden.

Anhand eines in der Zeichnung dargestellten Ausführungsbeispieles wird die Erfindung nachfolgend noch näher erläutert.
Es zeigen:

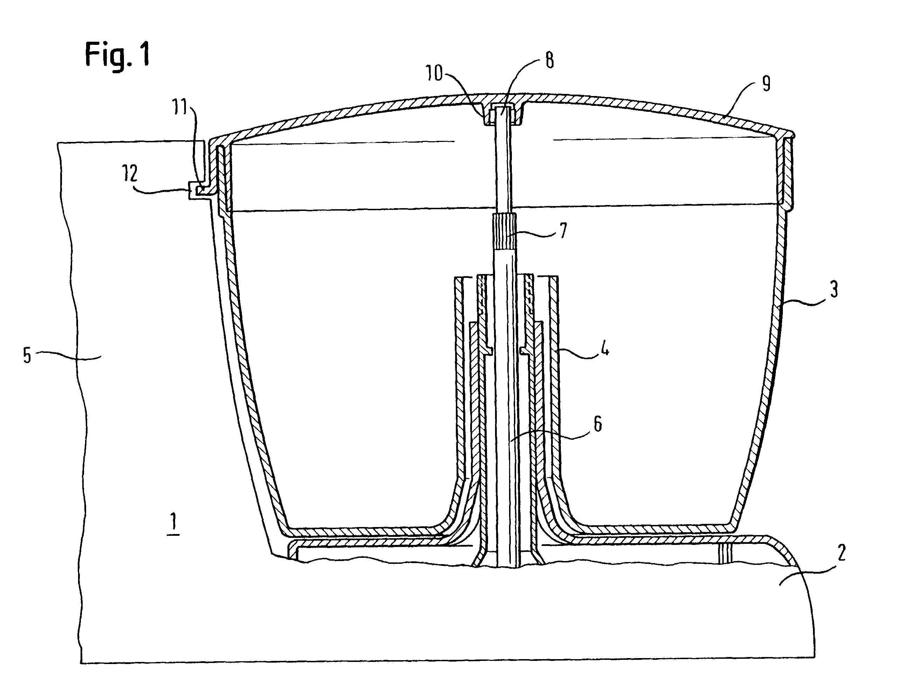

- Fig. 1: eine Küchenmaschine mit einem auf deren Sockelteil aufgesetzten Rührschüssel,
- Fig. 2: die Anordnung eines durch den Deckel einer Rührschüssel verstellbaren Sperrgliedes in Draufsicht,
- Fig. 3: die Anordnung eines durch den Deckel einer Rührschüssel verstellbaren Sperrgliedes im Schnitt,
- Fig. 4: die Ankoppelung eines Sperrklobens an eine mit einem Schaltknebel drehfest verbundene Kulissenscheibe und
- Fig. 5: die Stellung eines Sperrgliedes in der "Ein"-Stellung eines mit dem Schalter eines Antriebsmotors verbundenen Schaltknebels.

Mit 1 ist das Gehäuse einer Küchenmaschine bezeichnet. Auf den waagerechten Sokkelteil 2 dieses Gehäuses 1 ist eine Rührschüssel 3 aufgesetzt. Diese Rührschüssel 3 weist in ihrer Mitte einen Hohlstutzen 4 auf, durch den eine von dem im senkrecht verlaufenden Gehäuseteil 5 des Gehäuses 1 eingebauten Antriebsmotor angetriebene Abtriebswelle 6 hindurchgeführt ist. Die Abtriebswelle 6 weist eine Ankoppelstelle 7 für Bearbeitungswerkzeuge auf. Mit ihrem freien Ende 8 ist die Abtriebswelle 6 in einer am Dekkel 9 der Rührschüssel 3 vorgesehenen Lageraufnahme 10 gelagert. An dem Deckel 9 ist eine nach radial außen weisende Lasche 11 angeformt, die durch eine Verschwenkbewegung des Deckels 9 in einen an dem senkrechten Gehäuseteil 5 vorgesehenen waagerechten Schlitz 12 eingeschwenkt werden kann.

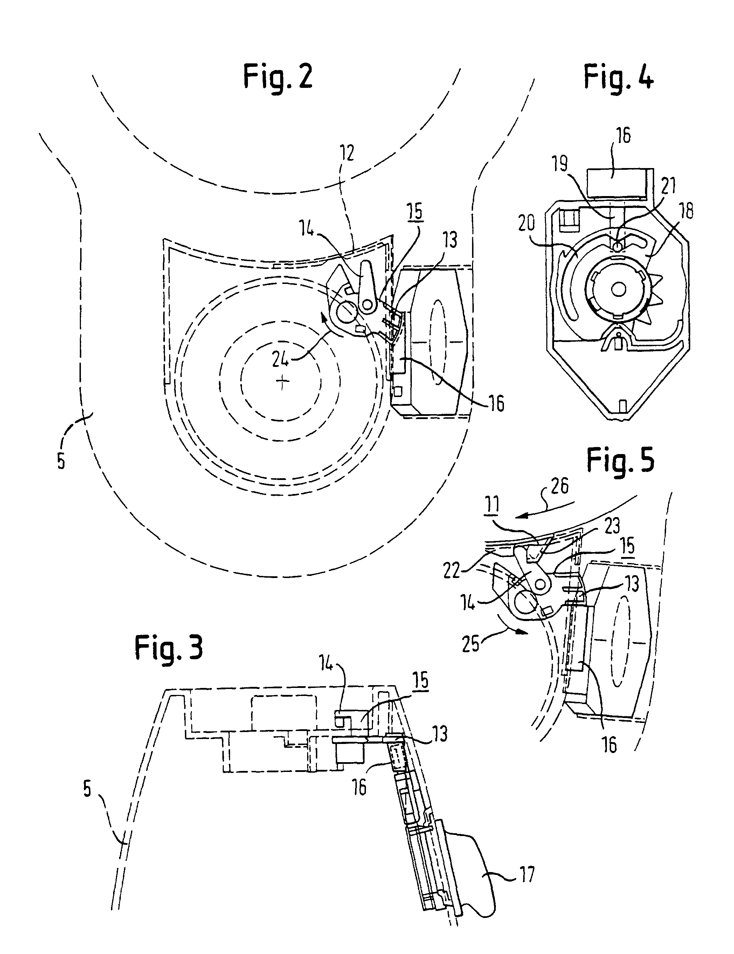

Im Innern des Gehäuseteiles 5 ist im Bereich des Schlitzes 12 ein zwei Hebelarme 13 und 14 aufweisendes Sperrglied 15 verschwenkbar angeordnet. Durch eine in der Zeichnung nicht dargestellte Feder wird das Sperrglied 15 in seine Sperrstellung gedrängt (siehe Pfeil 24 in Fig. 2), in der der eine Hebelarm 13 in senkrechter Richtung über einem Sperrkloben 16 liegt. Der Sperrkloben 16 wird bei Schaltbewegungen eines Schaltknebels 17, durch den ein im Stromkreis des Antriebsmotors liegender, in der Zeichnung nicht dargestellter Schalter betätigt wird, in senkrechter Richtung verschoben. Hierzu ist eine mit dem Schaltknebel 17 drehfest verbundene Kulissenscheibe 18 vorgesehen, an die der Sperrkloben 16 mittels eines an einem mit ihm verbundenen Leistenstutzen 19 angebrachten und in einen Kulissenschlitz 20 der Kulissenscheibe 18 eingreifenden Zapfens 21 formschlüssig angekoppelt ist. Die Fig. 4 zeigt die Lage des Sperrklobens 16 in der "Aus"-Stellung des Schaltknebels 17. Bei einer Verdrehbewegung des Schaltknebels 17 und damit der Kulissenscheibe 18 wird der Sperrkloben 16 durch den Verlauf des Kulissenschlitzes 20 bedingt nach oben angehoben. Ein solches Anheben ist aber nur möglich, wenn sich der eine Hebelarm 13 des Sperrgliedes 15 nicht in dem Verstellweg des Sperrklobens 16 befindet. Hierzu muss das Sperrglied 15 entsprechend verschwenkt werden.

Das Verschwenken des Sperrgliedes 15 wird durch die Lasche 11 des Deckels 9 der Rührschüssel 3 bewirkt. Bei der entsprechenden Verschwenkbewegung (siehe Pfeil 26 in Fig. 5) der Rührschüssel 3 dringt die Lasche 11 in den Schlitz 12 ein und trifft dabei auf den anderen Hebelarm 14 des Sperrgliedes 15. Dieses wird dadurch entgegen dem Uhrzeigersinn verschwenkt (siehe Pfeil 25 in Fig.5), so dass der eine Hebelarm 13 des Sperrgliedes 15 den Verstellweg des Sperrklobens 16 freigibt. Somit kann der Antriebsmotor durch entsprechendes Verdrehen des Schaltknebels 17 eingeschaltet werden. Dies ist zulässig, da die Bedingung "Rührschüssel 3 durch Deckel 5 verschlossen" erfüllt ist. Bei der Verdrehung des Schaltknebels 17 zum Einschalten des Antriebsmotors wird der Sperrkloben 16 angehoben und legt sich hinter den einen Hebelarm 13 des Sperrgliedes 15.

Durch den hinter dem einen Hebelarm 13 liegenden Sperrkloben 16 wird nun andererseits das Sperrglied 15 an einem Rückschwenken gehindert. Dies hat zur Folge, dass die Lasche 11 durch den anderen Hebelarm 14 des Sperrgliedes 15 blockiert wird und nicht aus dem Schlitz 12 herausgeschwenkt werden kann. Damit kann aber auch der Deckel 9 nicht von der Rührschüssel 3 abgenommen werden. Da der Sperrkloben 16 in der "Ein"-Stellung des Schaltknebels 17 und damit auch in der "Ein"-Stellung des im Stromkreis des Antriebsmotors liegenden Schalters stets hinter dem einen Hebelarm 13 des Sperrgliedes 15 liegt, kann der Deckel 9 im eingeschalteten Zustand des Antriebsmotor nicht von der Rührschüssel 3 abgenommen werden.

Um die entsprechende Blockierung des Deckels 9 zu erreichen ist die Lasche 11 zweigeteilt ausgebildet. Sie weist einen in ihrer Einschwenkrichtung voreilenden ersten Laschenteil 22 auf, der weniger weit über den Umfangsrand des Deckels 9 vorragt. Ein zweiter Laschenteil 23 ragt dagegen soweit nach radial außen, dass er beim Einschwenken der Lasche 11 in den Schlitz 12 auf den anderen Hebelarm 14 des Sperrgliedes 15 trifft und dadurch beim Einschwenken der Lasche 11 das Sperrglied 15 entgegen dem Uhrzeiger verschwenkt. Durch die Verschwenkbewegung des Sperrgliedes 15 wird der andere Hebelarm 14 näher zu dem Umfangsrand des Deckels 9 bewegt, so dass er mit seinem freien Ende hinter den weniger weit vorragenden ersten Laschenteil 22 zu liegen kommt. Damit wird ein Rückschwenken des Deckels 9 verhindert, solange das Sperrglied 15 durch den Sperrkloben 16 blockiert wird. Dies ist, wie bereits weiter oben beschrieben, immer dann der Fall, wenn sich der Schaltknebel 17 in der "Ein"-Stellung befindet.

Bei der beschriebenen Küchenmaschine ist über die entsprechenden Sperrmechanismen sicher gestellt, dass einerseits der Antriebsmotor nicht eingeschaltet werden kann, wenn die Rührschüssel 3 nicht durch den Deckel 9 verschlossen ist und andererseits der Dekkel 9 nicht von der Rührschüssel 3 abgenommen werden kann, solange sich der Schaltknebel 17 und damit der mit ihm gekoppelte Schalter in der "Ein"-Stellung befinden. Auf diese Weise wird auch verhindert, dass beispielsweise auch bei einer unter Umgehung einer Schalterbetätigung durch Ziehen oder Einstecken des Netzsteckers erfolgenden In- oder Außerbetriebnahme der Küchenmaschine ein Betrieb der Küchenmaschine ohne auf die Rührschüssel 3 aufgesetzten Deckel 9 möglich ist.

## Patentansprüche

1. Küchengerät, insbesondere Küchenmaschine oder Saftzentrifuge, bei dem in einem mittels eines Deckelteiles (9) verschließbaren Behältnis (3) ein mit dem elektromotorischen Antrieb des Gerätes gekoppeltes Werkzeug angeordnet ist und am Gehäuse (1) des Küchengerätes ein Betätigungselement (17) für einen im Stromkreis des elektromotorischen Antriebes liegenden Schalter vorgesehen ist, wobei ein durch die Schaltbewegung des Betätigungselementes (17) verstellbarer Sperrkloben (16) vorgesehen ist, in dessen Verstellweg ein Sperrglied (15) ragt, welches durch die Einwirkung einer Kraft selbsttätig in seine Sperrstellung verstellbar und durch ein mit der Deckelteil (9) gekoppeltes Verstellorgan (11) aus seiner Sperrstellung bewegbar ist. **dadurch gekennzeichnet, dass** das Betätigungselement (17) und der Sperrkloben (16) zwei getrennte Bauteile sind, die mechanisch derart gekoppelt sind, dass der Sperrkloben (16) durch die Schaltbewegung des Betätigungselements (17) verstellbar ist.

2. Als Küchenmaschine ausgebildetes Küchengerät nach Anspruch 1, **dadurch gekennzeichnet, dass** an dem auf die Rührschüssel (3) der Küchenmaschine aufsetzbaren Deckelteil (9) als Verstellorgan eine nach radial außen ragende Lasche (11) ausgebildet ist, welche durch eine entsprechende Drehbewegung der Rührschüssel (3) in einen an einem senkrecht verlaufenden Gehäuseteil (5) der Küchenmaschine vorgesehenen Schlitz (12) einschwenkbar ist, dass das Sperrglied (15) doppelhebelarmig ausgebildet und verschwenkbar angeordnet ist und der eine Hebelarm (13) des Sperrgliedes (15) im Verstellweg des Sperrklobens (16) liegt und dass ferner der andere Hebelarm (14) des Sperrgliedes (15) im Bereich des Schlitzes (12) in den Verschwenkweg der Lasche (11) ragt.

3. Küchenmaschine nach Anspruch 1 oder 2, **dadurch gekennzeichnet, dass** das Sperrglied (15) durch Federkraft in seine Sperrstellung verschwenkbar ist.

4. Küchenmaschine nach einem der vorhergehenden Ansprüche, **dadurch gekennzeichnet, dass** der Sperrkloben (16) durch Krafteinwirkung an einer an einer Kulissenscheibe (18) vorgesehenen Kulissenbahn anliegt, die in Verdrehrichtung mit dem als verdrehbarer Schaltknebel (17) ausgebildeten Betätigungselement gekoppelt ist.

5. Küchenmaschine nach einem der Ansprüche 1-3, **dadurch gekennzeichnet, dass** der Sperrkloben (16) mittels eines mit ihm verbundenen Zapfens (21) in einen an einer Kulissenscheibe (18) vorgesehenen Kulissenschlitz (20) eingreift, die in Verdrehrichtung mit dem als verdrehbarer Schaftknebel (17) ausgebildeten Betätigungselement gekoppelt ist.

6. Küchenmaschine nach einem der vorhergehenden Ansprüche, **dadurch gekennzeichnet, dass** der Sperrkloben (16) in der Ein-Stellung des Schaltknebels (17) den einen Hebelarm (13) des Sperrgliedes (15) hintergreift und die Rückschwenkbewegung des Sperrgliedes (15) blockiert.

## Claims

1. Kitchen appliance, particularly kitchen machine or juice centrifuge, in which a tool coupled with the electric-motorised drive of the appliance is arranged in a container (3) closable by means of a lid member (9) and an actuating element (17) for a switch lying in the current circuit of the electric-motorised drive is provided at the housing (1) of the kitchen appliance, wherein a locking block (16), which is adjustable by the switching movement of the actuating element (17) and into the adjustment part of which a locking element (15) projects, is provided, which locking element is automatically adjustable into its locking setting by the action of a force and is movable out of its locking setting by an adjusting element (11) coupled with the lid member (9), **characterised in that** the actuating element (17) and the locking block (16) are two separate components which are mechanically coupled in such a manner that the locking block (16) is adjustable by the switching movement of the actuating element (17).

2. Kitchen appliance according to claim 1 constructed as a kitchen machine, **characterised in that** a radially outwardly projecting tongue (11) is formed as adjusting element at the lid member (9), which can be placed on the stirring bowl (3) of the kitchen machine, and is pivotable by a corresponding rotational movement of the stirring bowl (3) into a slot (12) provided at a vertically extending housing part (5) of the kitchen machine, and the locking element (15) is constructed with double-lever arms and is arranged to be pivotable, one lever arm (13) of the locking element (15) lying in the adjustment path of the locking block (16) and in addition the other lever arm (14) of the locking element (15) projecting in the region of the slot (12) into the pivotation path of the tongue (11).

3. Kitchen machine according to claim 1 or 2, **characterised in that** the locking element (15) is pivotable into its locking setting by spring force.

4. Kitchen machine according to one of the preceding claims, **characterised in that** the locking block (16) bears by force action against a gate guide track which is provided at a gate guide disc (18) and is coupled in rotational direction with the actuating element constructed as a rotatable switching lever (17).

5. Kitchen machine according to one of claims 1 to 3, **characterised in that** the locking block (16) engages by means of a pin (21), which is connected therewith, in a gate guide slot (20), which is provided at a gate guide disc (18) and which is coupled in rotatable direction with the actuating element constructed as a rotatable switching lever (17).

6. Kitchen machine according to one of the preceding claims, **characterised in that** the locking block (16) in the 'on' setting of the switching lever (17) engages behind the one lever arm (13) of the locking element (15) and blocks return pivot movement of the locking element (15).

## Revendications

1. Appareil de cuisine, en particulier robot de cuisine ou centrifugeuse pour jus, dans lequel est disposé, dans un récipient (3) pouvant être fermé par un couvercle (9), un outil couplé avec l'entraînement électromoteur de l'appareil et dans lequel est prévu, sur le boîtier (1) de l'appareil de cuisine, un élément d'actionnement (17) pour un contacteur situé dans le circuit électrique de l'entraînement électromoteur, une tige de verrouillage (16) réglable par le mouvement de contact de l'élément d'actionnement (17) étant prévue, dans la course de réglage de laquelle se dresse un élément de verrouillage (15) lequel peut être amené automatiquement dans sa position de verrouillage grâce à l'action d'une force et quitter sa position de verrouillage grâce à un organe de réglage (11) couplé au couvercle (9), **caractérisé en ce que** l'élément d'actionnement (17) et la tige de verrouillage (16) sont deux composants séparés, couplés mécaniquement de telle manière que la tige de verrouillage (16) est réglable par le mouvement de contact de l'élément d'actionnement (17).

2. Appareil de cuisine réalisé sous forme de robot de cuisine selon la revendication 1, **caractérisé en ce qu'**une languette (11) faisant saillie radialement vers l'extérieur est réalisée comme organe de réglage sur le couvercle (9) pouvant être posé sur le bol mixeur (3) du robot de cuisine, laquelle languette, grâce à un mouvement de rotation adéquat du bol mixeur (3), peut pivoter dans une rainure (12) prévue sur un élément de boîtier (5) vertical du robot de cuisine, **en ce que** l'élément de verrouillage (15) est réalisé sous forme de bras à double levier et monté de manière pivotante et que l'un (13) des bras de levier de l'élément de verrouillage (15) est situé dans la course de réglage de la tige de verrouillage (16) et **en ce qu'**en outre l'autre bras de levier (14) de l'élément de verrouillage (15) se dresse au niveau de la rainure (12) dans la course de pivotement de la languette (11).

3. Robot de cuisine selon la revendication 1 ou 2, **caractérisé en ce que** l'élément de verrouillage (15) peut pivoter dans sa position de verrouillage par force élastique.

4. Robot de cuisine selon l'une des revendications précédentes, **caractérisé en ce que** la tige de verrouillage (16), grâce à l'action d'une force, est appliquée contre un chemin à coulisse prévu sur un disque à coulisse (18), lequel chemin à coulisse, dans le sens de rotation, est couplé à l'élément d'actionnement réalisé sous forme de manette de contact rotative (17).

5. Robot de cuisine selon l'une des revendications 1 à 3, **caractérisé en ce que** la tige de verrouillage (16), au moyen d'un pivot (21) relié à celle-ci, s'introduit dans une rainure à coulisse (20) prévue sur un disque à coulisse (18), laquelle rainure à coulisse, dans le sens de rotation, est couplé à l'élément d'actionnement réalisé sous forme de manette de contact rotative (17).

6. Robot de cuisine selon l'une des revendications précédentes, **caractérisé en ce que** la tige de verrouillage (16), en position "Marche" de la manette de contact (17), saisit ledit un bras de levier (13) de l'élément de verrouillage (15) par l'arrière et bloque le pivotement vers l'arrière de l'élément de verrouillage (15).
